# EUROPEAN PATENT APPLICATION

(11) **EP 4 582 274 A1**
(43) Date of publication of application: **09.07.2025**
(21) Application number: 23881940.3
(22) Date of filing: 27.10.2023
(51) Int. Cl.: B60J 1/00

(54) **MOTOR VEHICLE, VEHICLE DOOR AND LUMINOUS GLASS ASSEMBLY**

(30) Priority: 28.10.2022 CN 202211333900
(71) Applicant: Fuyao Glass Industry Group Co., Ltd., Fuqing, Fujian 350300 (CN)
(72) Inventor: TENG, Yu, Fuzhou, Fujian 350300 (CN); LIN, Qipeng, Fuzhou, Fujian 350300 (CN); DING, Zhiwen, Fuzhou, Fujian 350300 (CN); WANG, Li, Fuzhou, Fujian 350300 (CN); XU, Chaowu, Fuzhou, Fujian 350300 (CN); FENG, Chengbin, Fuzhou, Fujian 350300 (CN)
(74) Representative: Grassi, Stefano
(86) International application number: PCT/CN2023/126982
(87) International publication number: WO 2024/088365

(57) **Abstract**

The present application relates to a motor vehicle, a vehicle door and a luminous glass assembly. The luminous glass assembly comprises a glass body (10), a coating structure (20) and an atmosphere lamp group (30). The glass body (10) is provided with a first region (11) and a second region connected to the first region (11). The first region (11) is a light-transmitting region. The coating structure (20) is correspondingly arranged in the second region. The coating structure (20) comprises a light-shielding coating (21), wherein the light-shielding coating (21) is provided with a hollow opening (211). The atmosphere lamp group (30) is connected to a back surface of the glass body (10), and the atmosphere lamp group (30) comprises a light-transmitting pattern (311) arranged corresponding to the hollow opening (211), such that light can sequentially pass through the light-transmitting pattern (311) and the hollow opening (211) and be visible on a front surface of the glass body (10), and viewed inwards from an outer side of the glass body (10), the color of the light-transmitting pattern (311) is different from that of the light-shielding coating (21).

## Description

### CROSS-REFERENCE TO RELATED APPLICATIONS

The present disclosure claims priority to Chinese Patent Application No. 2022113339009, entitled "MOTOR VEHICLE, VEHICLE DOOR AND LUMINOUS GLASS ASSEMBLY" and filed with the China Patent Office on October 28, 2022, the entire contents of which are incorporated herein by reference.

### TECHNICAL FIELD

The present application relates to the field of vehicle technologies, and in particular, to a motor vehicle, a vehicle door and a luminous glass assembly.

### BACKGROUND

With the rapid development of living standards and science and technology, motor vehicles, including but not limited to, cars, passenger cars, buses, and the like, have increasingly appeared in people's lives.

In the related art, as an important part of a motor vehicle, a luminous glass assembly, such as a rear side window glass, may provide rear passengers with a view and seal a body of the motor vehicle to prevent water/airflow from flowing into the vehicle to improve riding comfort. The luminous glass assembly is only a single transparent glass, and is generally provided with a first region and a second region. The second region is arranged around the first region. The second region is generally located around the luminous glass assembly. A peripheral surface of the luminous glass assembly is coated with a black ink layer, and the black ink layer is sintered and solidified on a surface of the luminous glass assembly to achieve opacity.

A luminous glass assembly of a related vehicle model is only a single transparent glass. Black ink is printed on a back surface of the transparent glass (the side facing away from a glass body inside the vehicle) and the black ink is sintered and solidified to form a light-blocking coating. However, poor recognizability of the luminous glass assembly results in poor product performance, which cannot provide side light signal reminders, making it inconvenient for consumers to quickly lock the vehicle.

### SUMMARY

According to various embodiments of the present application, a motor vehicle, a vehicle door and a luminous glass assembly are provided.

The technical solutions are as follows. A luminous glass assembly includes: a glass body, the glass body being a transparent plate, the glass body being provided with a first region and a second region connected to the first region, and the first region being a light-transmitting region; a coating structure, the coating structure being correspondingly arranged in the second region; the coating structure including a light-shielding coating, and the light-shielding coating being provided with a hollow opening; and an atmosphere lamp group, the atmosphere lamp group being connected to a back surface of the glass body, and the atmosphere lamp group including a light-transmitting pattern arranged corresponding to the hollow opening, such that light can sequentially pass through the light-transmitting pattern and the hollow opening and be visible on a front surface of the glass body, and the color of the light-transmitting pattern is different from that of the light-shielding coating when viewed inwardly from an outer side of the glass body.

A luminous glass assembly includes: a glass body, the glass body being a transparent plate, the glass body being provided with a first region and a second region connected to the first region, and the first region being a light-transmitting region; and a coating structure, the coating structure being correspondingly arranged in the second region; the coating structure including a light-shielding coating and a light-transmitting coating connected to the light-shielding coating, and a color of the light-shielding coating being different from that of the light-transmitting coating.

A vehicle door includes the luminous glass assembly.

A motor vehicle includes the luminous glass assembly.

Details of one or more embodiments of the present application are set forth in the following accompanying drawings and descriptions. Other features, objectives, and advantages of the present application become obvious with reference to the specification, the accompanying drawings, and the claims.

### BRIEF DESCRIPTION OF THE DRAWINGS

The accompanying drawings forming part of the present application are intended to provide further understanding of the present application. Exemplary embodiments of the present application and descriptions thereof are intended to explain the present application, and do not constitute any inappropriate limitation on the present application.

In order to more clearly illustrate the technical solutions in embodiments of the present application, the accompanying drawings used in the description of the embodiments will be briefly introduced below. It is apparent that, the accompanying drawings in the following description are only some embodiments of the present application, and other drawings can be obtained by those of ordinary skill in the art from the provided drawings without creative efforts.
FIG. 1 is a schematic structural view of a luminous glass assembly according to an embodiment of the present invention;
FIG. 2 is an exploded schematic view of a luminous glass assembly according to an embodiment of the present invention;
FIG. 3 is a schematic structural view of a light guide member according to an embodiment of the present invention;
FIG. 4 is a schematic cross-sectional structural view of a luminous glass assembly at a hollow opening according to an embodiment of the present invention;
FIG. 5 is a schematic cross-sectional structural view of a luminous glass assembly at a hollow opening according to another embodiment of the present invention;
FIG. 6 is a schematic cross-sectional structural view of a luminous glass assembly at a hollow opening according to yet another embodiment of the present invention;
FIG. 7 is a schematic cross-sectional structural view of a luminous glass assembly at a hollow opening according to still another embodiment of the present invention; and
FIG. 8 is a schematic cross-sectional structural view of a luminous glass assembly at a hollow opening according to a further embodiment of the present invention.
10: glass body; 11: first region; 20: coating structure; 21: light-shielding coating; 211: hollow opening; 22: light-transmitting coating; 30: atmosphere lamp group; 31: light guide member; 311: light-transmitting pattern; 312: light-shielding portion; 32: module housing; 33: reflective film; 34: light guide plate; 35: light-homogenizing film; 36: circuit board; 37: PU adhesive.

### DETAILED DESCRIPTION

In order to make the above objectives, features, and advantages of the present application more obvious and understandable, specific implementations of the present application are described in detail below with reference to the accompanying drawings. In the following description, many specific details are set forth in order to fully understand the present application. However, the present application can be implemented in many other ways different from those described herein, and those skilled in the art can make similar improvements without departing from the connotation of the present application. Therefore, the present application is not limited by the specific embodiments disclosed below.

As described in the Background, the rear side glass window in the related art has a problem of poor recognizability, which cannot serve as a reminder regardless of whether light in an environment is good or not. According to the inventor's research, the reason for this problem is that the luminous glass assembly is set to a single transparent glass, and the entire second region is printed with black ink, which is completely opaque, so recognizability of the vehicle cannot be improved. Especially in poor light environments (such as nighttime), a side light signal reminder cannot be provided. Certainly, in good light environments (such as daytime), generally, a light signal reminder cannot be provided either. As a result, it is inconvenient for consumers to quickly lock vehicles.

Based on the above reasons, the present invention provides a motor vehicle, a vehicle door and a luminous glass assembly, which can improve recognizability of the vehicle and can provide a light signal reminder, facilitating quick locking of the vehicle.

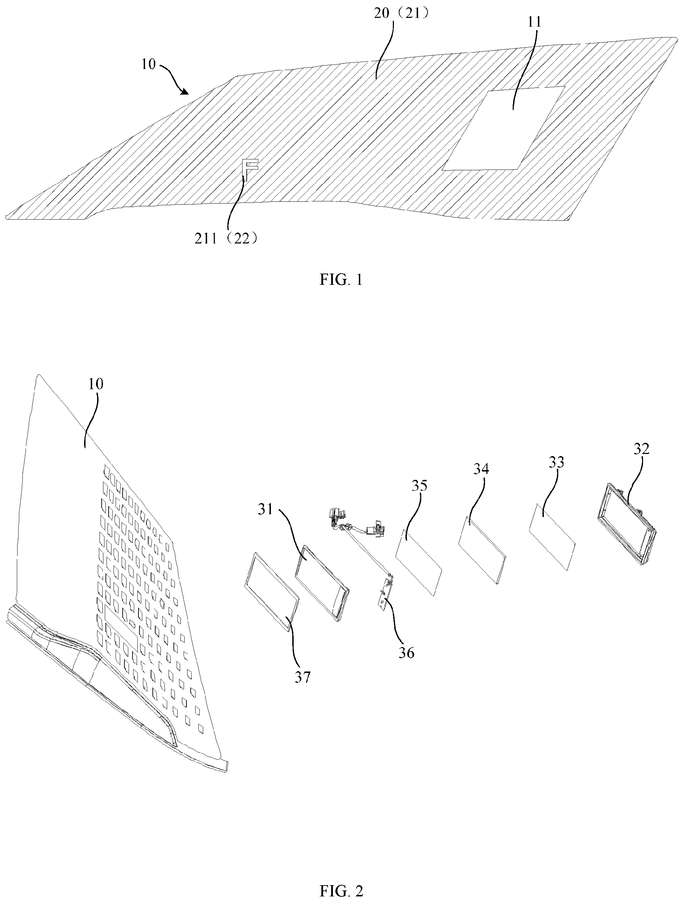

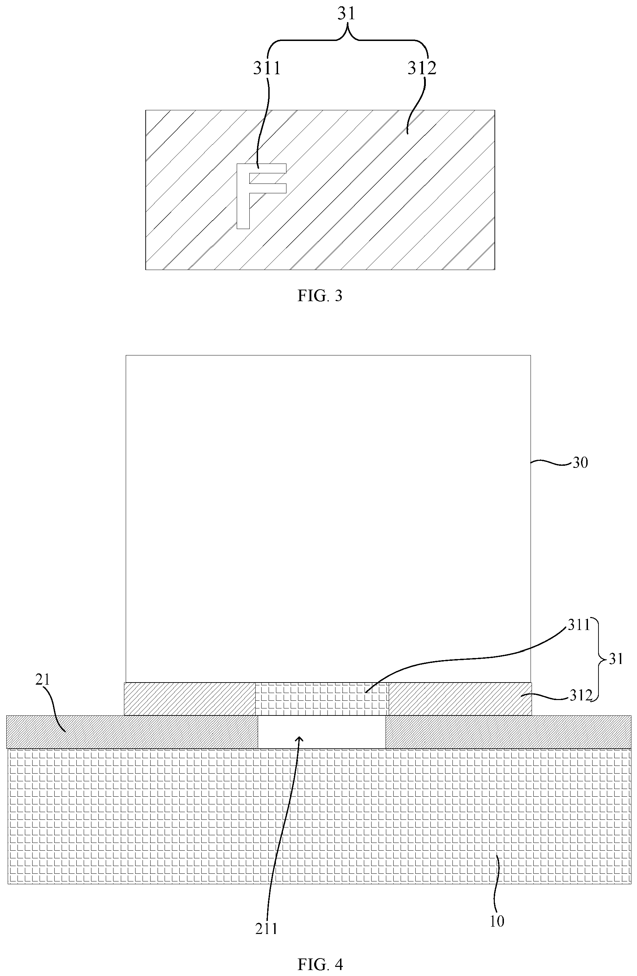

Referring to FIG. 1 to FIG. 4, FIG. 1 is a schematic structural view of a luminous glass assembly according to an embodiment of the present invention, FIG. 2 is an exploded schematic view of a luminous glass assembly according to an embodiment of the present invention, FIG. 3 is a schematic structural view of a light guide member 31 according to an embodiment of the present invention, and FIG. 4 is a schematic cross-sectional structural view of a luminous glass assembly at a hollow opening 211 according to an embodiment of the present invention. An embodiment of the present application provides a luminous glass assembly. The luminous glass assembly includes a glass body 10, a coating structure 20, and an atmosphere lamp group 30. The glass body 10 is a transparent plate. The glass body 10 is provided with a first region 11 and a second region (e.g., a region outside the first region 11 shown in FIG. 1) connected to the first region 11. The first region 11 is a light-transmitting region. The coating structure 20 is correspondingly arranged in the second region, and is specifically located on, for example, a back surface of the glass body 10, which may certainly be located on a front surface of the glass body 10. The coating structure 20 includes a light-shielding coating 21. The light-shielding coating 21 is provided with a hollow opening 211. The atmosphere lamp group 30 is connected to a back surface of the glass body 10, and the atmosphere lamp group 30 includes a light-transmitting pattern 311 arranged corresponding to the hollow opening 211, such that light can sequentially pass through the light-transmitting pattern 311 and the hollow opening 211 and be visible on the front surface of the glass body 10. When viewed inwardly from an outer side of the glass body 10, a color of the light-transmitting pattern 311 is different from that of the light-shielding coating 21.

Optionally, the atmosphere lamp group includes a light guide member 31 and a lighting mechanism. The light guide member 31 includes a light-transmitting pattern 311. Light emitted from the lighting mechanism can pass through the light-transmitting pattern 311 and the hollow opening 211 and be visible on the front surface of the glass body 10.

It is to be noted that the back surface of the glass body 10 refers to a side surface facing an interior of the motor vehicle, and the front surface of the glass body 10 refers to a side surface away from the interior of the motor vehicle, that is, facing an outside of the motor vehicle.

Compared with the coating structure 20 in the related art, according to the above luminous glass assembly, instead of designing the coating structure 20 as an integrated light-shielding structure to achieve an overall light-shielding effect in the second region as in the related art, the coating structure 20 is designed as a light-shielding coating 21, and the light-shielding coating 21 is provided with a hollow opening 211. The light-shielding coating 21 can still achieve the light-shielding effect in the region covered, and the hollow opening 211 of the light-shielding coating 21 has a better light-transmitting effect. In this way, on the one hand, when the atmosphere lamp group 30 emits light, the light of the light guide member 31 can be emitted outwards through the hollow opening 211, that is, the coating structure 20 has a light signal at the hollow opening 211, which can provide a light signal reminder to facilitate quick locking of the vehicle, thereby improving recognizability of the vehicle. On the other hand, when the atmosphere lamp group 30 does not emit light, if there is natural light outside or inside the motor vehicle, such as daytime, since the color of the light-shielding coating 21 is different from that of a plate surface of the light guide member 31 opposite to the hollow opening 211, the human eye can also be facilitated to determine the position of the hollow opening 211 from the coating structure 20, so as to provide a light signal reminder to facilitate quick locking of the vehicle, thereby improving recognizability of the vehicle.

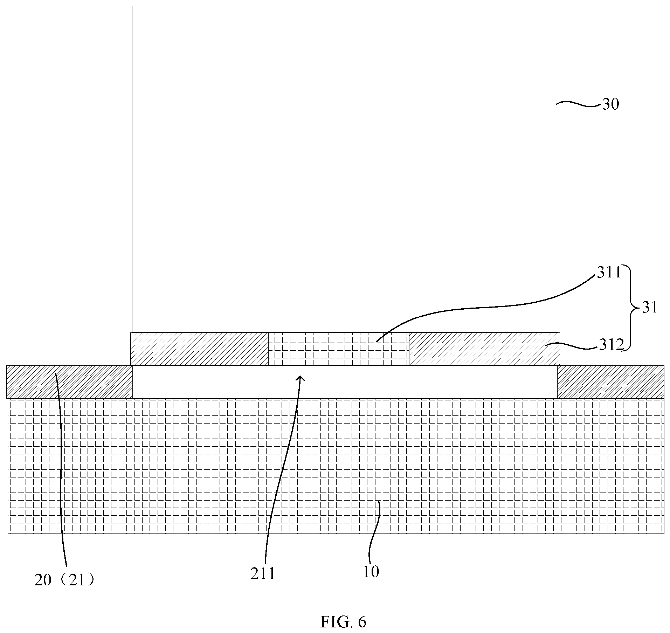

It is to be noted that the specific shape and size of the hollow opening 211 may be flexibly adjusted and configured according to an actual requirement, which are not limited herein. Optionally, the hollow opening 211 includes, but is not limited to, one or more combinations of letters, text, icons, animal and plant images, and may also be designed in other regular or irregular shapes. In this embodiment, the hollow opening 211 is specifically configured to be one letter, such as F as shown in FIG. 1, and may certainly be configured to be a combination of two or more letters according to an actual requirement. In addition, referring to FIG. 6, the hollow opening 211 may also be designed to match the shape of the light guide member 31, and for example, a design size of the hollow opening 211 may be slightly smaller than that of the light guide member 31, thereby preventing chromatic aberration observed at the hollow opening 211.

In addition, optionally, the light guide member 31 is arranged at the hollow opening 211, and for example, the light guide member 31 is firmly attached to the coating structure 20.

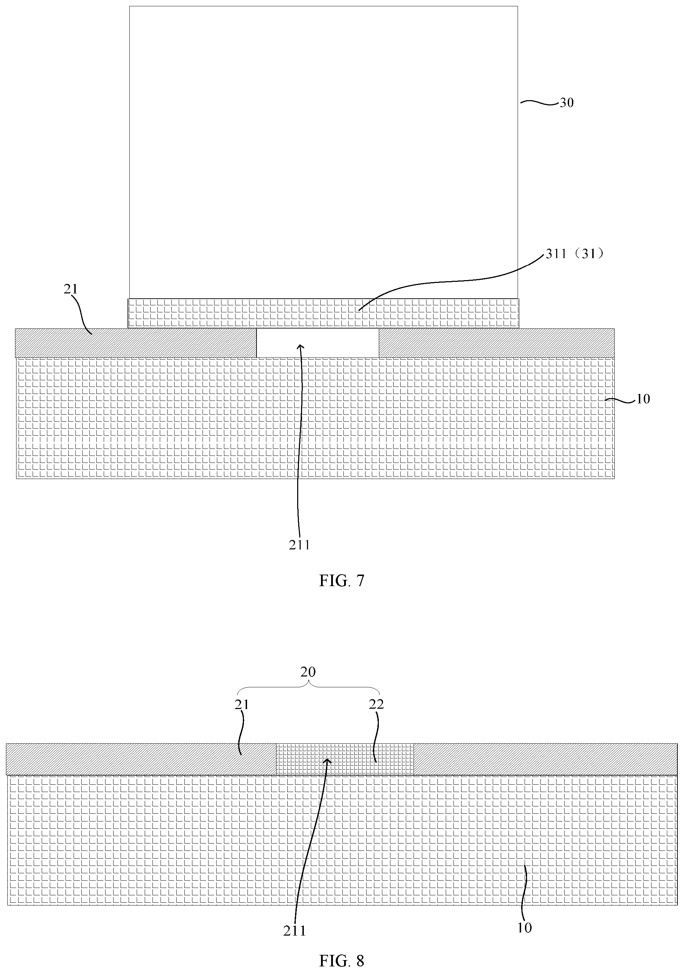

In addition, referring to FIG. 4 or FIG. 7, optionally, the color of the plate surface of the light guide member 31 opposite to the hollow opening 211 is different from the color of the light-shielding coating 21.

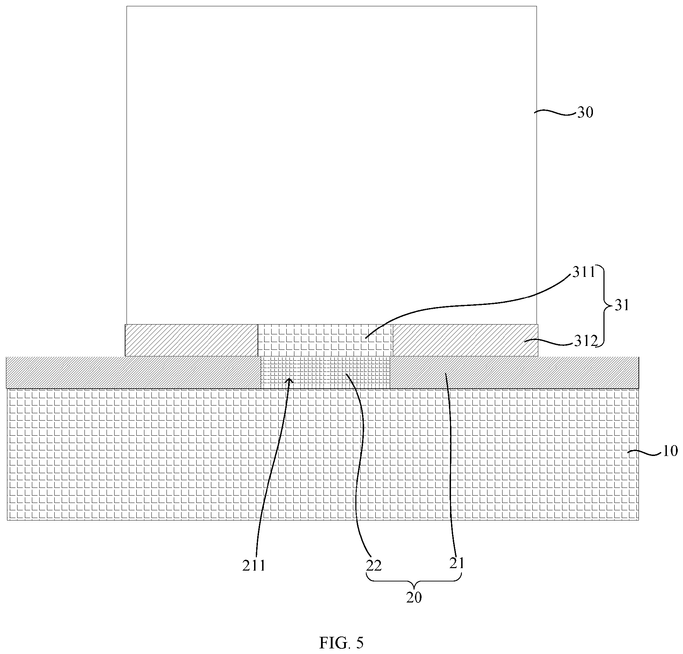

Referring to FIG. 1 and FIG. 5, compared with FIG. 4, in FIG. 5, a light-transmitting coating 22 is added at the hollow opening 211. In an embodiment, the coating structure 20 may further include a light-transmitting coating 22 correspondingly arranged at the hollow opening 211. In this way, by arranging the light-transmitting coating 22 at the hollow opening 211, the light-transmitting effect at the hollow opening 211 is not affected on the one hand, and surface integrity of the coating structure 20 can be ensured on the other hand.

Referring to FIG. 1 and FIG. 4, in an embodiment, the light guide member 31 further includes a light-shielding portion 312 arranged around at least one side of a periphery of the light-transmitting pattern 311, such that the light emitted from the lighting mechanism can pass through the light-transmitting pattern 311 and be blocked by the light-shielding portion 312. The color of the light-transmitting pattern 311 is different from that of the light-shielding coating 21. In this way, when the atmosphere lamp group 30 emits light, since the light-transmitting pattern 311 can transmit light, the light can be emitted. However, the light-shielding portion 312 has a light blocking effect, thus no light may be emitted. The light emitted through the light-transmitting pattern 311 may be emitted outwards through the hollow opening 211 and be observed, so as to provide a light signal reminder to facilitate quick locking of the vehicle, thereby improving recognizability of the vehicle. In addition, when the atmosphere lamp group 30 stops working, if there is natural light outside or inside the motor vehicle, such as daytime, since the color of the light-transmitting pattern 311 is different from that of the light-shielding coating 21, the human eye can also be facilitated to quickly determine the positions of the hollow opening 211 and the light-transmitting pattern 311 from the coating structure 20.

Referring to FIG. 4, in an embodiment, a color of material of the light-shielding portion 312 is consistent with that of the light-shielding coating 21. That is, the color of the material of the light-shielding portion 312 is different from the color of the light-transmitting pattern 311.

Referring to FIG. 1, FIG. 3, and FIG. 4, in an embodiment, a shape of the light-transmitting pattern 311 adapts to that of the hollow opening 211. In addition, a size of the light-transmitting pattern 311 is larger than that of the hollow opening 211. In this way, light of the light-transmitting pattern 311 can be just emitted outwards through the hollow opening 211. In addition, since the size of the light-transmitting pattern 311 is slightly larger than that of the hollow opening 211, color aberration observed at the hollow opening 211 can be prevented.

It is to be noted that the shape of the light-transmitting pattern 311 may not adapt to that of the hollow opening 211 as in the above embodiment. The design shape and size of the hollow opening 211 and the design shape and size of the light guide member 31 may be flexibly adjusted and set according to an actual requirement, which are not limited herein.

Referring to FIG. 1 and FIG. 6, in an embodiment, the shape of the hollow opening 211 adapts to, for example, that of the light guide member 31. Specifically, the hollow opening 211 is configured to be in a square shape, the light guide member 31 is correspondingly configured to be in a square shape. The design size of the light guide member 31 is equal to that of the hollow opening 211, or the design size of the light guide member 31 is larger than that of the hollow opening 211. In this way, outside the motor vehicle, both the light-transmitting pattern 311 and the light-shielding portion 312 can be observed through the hollow opening 211. In order to ensure consistency between appearance surfaces of the light-shielding portion 312 and the light-shielding coating 21, the color of the light-shielding portion 312 is consistent with that of the light-shielding coating 21, both of which are, for example, black.

Referring to FIG. 1 and FIG. 7, in an embodiment, the light-shielding portion 312 of the light guide member 31 may alternatively be omitted. That is, for example, the entire surface of the light guide member 31 is provided with the light-transmitting pattern 311. In this way, the color of the entire plate surface of the light guide member 31 is different from the color of the light-shielding coating 21.

Referring to FIG. 1 and FIG. 7, further, the size of the entire plate surface of the light guide member 31 is also larger than the design size of the hollow opening 211. The entire plate surface of the light guide member 31 is configured as, for example, a square block, a circular block, an elliptical block, or the like, and the design size of the hollow opening 211 is flexibly adjusted and configured, such that a required pattern appears on the front surface of the glass body.

Referring to FIG. 3 and FIG. 5, in an embodiment, the light-transmitting pattern 311 and the light-shielding portion 312 are integrally formed by double-material injection molding, so as to obtain the light guide member 31. In this way, the light guide member 31 can be mass-produced, resulting in a higher production efficiency.

In an embodiment, the light-shielding portion 312 is made of a black polymethyl methacrylate (PMMA) material. In addition, the light-transmitting pattern 311 is made of a light-transmitting PMMA material.

PMMA is a high molecular polymer, also known as acrylic or organic glass, which has advantages of high transparency, a low price, and easy machining.

Referring to FIG. 1, FIG. 3, and FIG. 5, in an embodiment, a surface color of the light-shielding coating 21 is dark, and a surface color of the light-shielding portion 312 is dark. In addition, a surface color of the light-transmitting pattern 311 is bright. In this way, in case of observation outside the motor vehicle, through the glass body 10 made of a light-transmitting material, compared with the dark light-shielding coating 21 and the dark light-shielding portion 312, the bright light-transmitting pattern 311 is easier to be observed by the human eye, especially in the case of low ambient brightness, thereby greatly improving product performance. In addition, brightness of the bright light-transmitting pattern 311 is relatively large, which provides a light signal reminder to facilitate quick locking of the vehicle, thereby improving recognizability of the vehicle. In addition, the dark light-shielding coating 21 and the dark light-shielding portion 312 are conducive to ensuring the overall light-shielding effect.

As an optional solution, the colors of the light-shielding coating 21 and the light-shielding portion 312 are, for example, bright, and the color of the light-transmitting pattern 311 is, for example, dark.

Dark colors include black, gray, dark blue, navy blue, maroon, and the like, which have good opacity. In addition, bright colors are relative to the dark colors and refer to colors with higher brightness. For example, bright colors are white, crimson, bright orange, golden, emerald green, pink blue, lavender, and the like, which are easy to observe.

Referring to FIG. 1, FIG. 2, and FIG. 4, in an embodiment, the plate surface of the light guide member 31 is bonded and fixed to the coating structure 20 by a transparent adhesive. The transparent adhesive is, for example, a PU adhesive 37.

As an optional solution, for example, the atmosphere lamp group 30 may alternatively be fixedly connected to the back surface of the glass body 10 through a vacuum suction cup, or may be fixed to the glass body 10 in other manners, which is not limited herein.

Referring to FIG. 2, in an embodiment, the atmosphere lamp group 30 further includes a module housing 32, a reflective film 33, a light guide plate 34, a light-homogenizing film 35, and a circuit board 36. The module housing 32 is provided with a cavity and a mounting opening communicated with the cavity. The light guide member 31 is arranged at the mounting opening. The reflective film 33 is connected to a portion of an inner wall of the cavity opposite to the mounting opening, and the light guide plate 34 and the light-homogenizing film 35 are sequentially arranged between the reflective film 33 and the light guide member 31. The light guide plate 34 is connected to the reflective plate and the light-homogenizing film 35, respectively, and the light-homogenizing film 35 is further connected to the light guide member 31. The circuit board 36 is connected to the light guide plate 34, and the circuit board 36 is provided with at least one LED lamp bead. The LED lamp bead faces the light guide plate 34. In this way, when the atmosphere lamp group 30 operates, the LED lamp bead of the circuit board 36 emits light, the light is guided into the light guide plate 34, and one part of the light from the light guide plate 34 is emitted outwardly through the light-homogenizing film 35 and the light guide member 31. In addition, the other part of the light from the light guide plate 34 is incident on a reflective plate, the other part of the light from the light guide plate 34 is reflected by the reflective plate, and the reflected light is emitted outwards through the light-homogenizing film 35 and the light guide member 31.

Referring to FIG. 1, FIG. 2, and FIG. 8 again, in another embodiment, a luminous glass assembly is provided. The luminous glass assembly includes a glass body 10 and a coating structure 20. The glass body 10 is a transparent plate. The glass body 10 is provided with a first region 11 and a second region connected to the first region 11. The first region 11 is a light-transmitting region. The coating structure 20 is correspondingly arranged in the second region, and is specifically located on, for example, a back surface of the glass body 10. Certainly, the coating structure 20 may alternatively be arranged on a front surface of the glass body 10. The coating structure 20 includes a light-shielding coating 21 and a light-transmitting coating 22 connected to the light-shielding coating 21. The color of the light-shielding coating 21 is different from that of the light-transmitting coating 22.

Compared with the coating structure 20 in the related art, according to the above luminous glass assembly, instead of designing the coating structure 20 as an integrated light-shielding structure to achieve an overall light-shielding effect in the second region as in the related art, the coating structure 20 is designed as a light-shielding coating 21 and a light-transmitting coating 22 connected to the light-shielding coating 21, the light-shielding coating 21 can still achieve the light-shielding effect in the region covered, and the light-transmitting coating 22 in the coating structure 20 has a better light-transmitting effect. In this way, on the one hand, when the atmosphere lamp group 30 inside the motor vehicle emits light, the light of the atmosphere lamp group 30 can be emitted outwards through the light-transmitting coating 22, that is, there is a light signal at the light-transmitting coating 22, which can provide a light signal reminder to facilitate quick locking of the vehicle, thereby improving recognizability of the vehicle. On the other hand, when the atmosphere lamp group 30 inside the motor vehicle does not emit light, if there is natural light outside or inside the motor vehicle, such as daytime, since the color of the light-shielding coating 21 is different from that of the light-transmitting coating 22, the human eye can also be facilitated to determine the position of the light-transmitting coating 22 directly from the coating structure 20, so as to provide a light signal reminder to facilitate quick locking of the vehicle, thereby improving recognizability of the vehicle.

It is to be noted that the specific structure and shape of the light-transmitting coating 22 may be flexibly adjusted and configured according to an actual requirement, which are not limited herein. Optionally, the light-transmitting coating 22 includes, but is not limited to, one or more combinations of letters, text, icons, animal and plant images, and may also be designed in other regular or irregular shapes. In this embodiment, the light-transmitting coating 22 is specifically configured to be one letter, such as F as shown in the figure, and may certainly be configured to be a combination of two or more letters according to an actual requirement.

For example, when the light-shielding coating 21 is formed on the back surface of the glass body 10, it includes, but not limited to, printing opaque ink or extremely low-transmittance ink on the back surface of the glass body 10, and then sintering the ink at a preset process temperature to obtain the light-shielding coating 21 connected to the back surface of the glass body 10.

In addition, similarly, when the light-transmitting coating 22 is formed on the back surface of the glass body 10, it includes, but not limited to, printing translucent ink or relatively high-transmittance ink on the back surface of the glass body 10, and then sintering the ink at a preset process temperature to obtain the light-transmitting coating 22 connected to the back surface of the glass body 10.

In addition, the light-shielding coating 21 and the light-transmitting coating 22 may be solidified and formed on the back surface of the glass body 10 in no particular order, or the ink of the two may be first printed on the back surface of the glass body 10 and then synchronously sintered at a preset process temperature to obtain the coating structure 20, which may certainly be formed on the back surface of the glass body 10 in other manners and may specifically be flexibly adjusted and configured according to an actual requirement.

Referring to FIG. 1 to FIG. 3, in an embodiment, the luminous glass assembly further includes an atmosphere lamp group 30. The specific position of the atmosphere lamp group 30 may be flexibly adjusted and configured according to an actual requirement, as long as the light can illuminate the light-transmitting coating 22. As an example, the atmosphere lamp group 30 is connected to the back surface of the glass body 10, and a light exit side of the atmosphere lamp group 30 faces the light-transmitting coating 22. In this way, the atmosphere lamp group 30 may be turned on according to an actual requirement. When the atmosphere lamp group 30 inside the motor vehicle emits light, the light of the atmosphere lamp group 30 can be emitted outwards through the light-transmitting coating 22, that is, there is a light signal at the light-transmitting coating 22, which can provide a light signal reminder to facilitate quick locking of the vehicle, thereby improving recognizability of the vehicle.

Referring to FIG. 1 and FIG. 3, in an embodiment, the light-shielding coating 21 is a dark coating. In addition, the light-transmitting coating 22 is a bright coating. In this way, in case of observation outside the motor vehicle, through the glass body 10 made of a light-transmitting material, compared with the dark light-shielding coating 21, the bright light-transmitting coating 22 is easier to be observed by the human eye, especially in the case of low ambient brightness, thereby greatly improving product performance. In addition, brightness of the bright light-transmitting coating 22 is relatively large, which provides a light signal reminder to facilitate quick locking of the vehicle, thereby improving recognizability of the vehicle. In addition, the dark light-shielding coating 21 helps to ensure the light-shielding effect of the light-shielding coating 21.

As an optional solution, the light-shielding coating 21 is, for example, a bright coating, and the light-transmitting coating 22 is, for example, a dark coating.

Dark colors include black, gray, dark blue, navy blue, maroon, and the like, which have good opacity. In addition, bright colors are relative to the dark colors and refer to colors with higher brightness. For example, bright colors are white, crimson, bright orange, golden, emerald green, pink blue, lavender, and the like, which are easy to observe.

In an embodiment, the color of the light-transmitting coating 22 is white, red, yellow, or green, and the color of the light-shielding coating 21 is black, gray, or dark blue.

In an embodiment, a thickness of the light-transmitting coating 22 is less than or equal to that of the light-shielding coating 21. In this way, when the thickness of the light-transmitting coating 22 is relatively small, a better light-transmitting effect can be ensured. When the thickness of the light-shielding coating 21 is relatively large, a better light-shielding effect can be ensured. In addition, when the thicknesses of the light-transmitting coating 22 and the light-shielding coating 21 are consistent, surface smoothness of the coating structure 20 can be ensured, so that the coating structure 20 is not easily scraped off, thereby improving product performance.

In an embodiment, the thickness of the light-transmitting coating 22 and the thickness of the light-shielding coating 21 are each configured to be 15 µm to 25 µm. In this way, after research, it was found that when the thickness of the light-transmitting coating 22 and the thickness of the light-shielding coating 21 are configured within this range, the thickness of the light-shielding coating 21 is not excessively small, thus ensuring a better light-shielding performance, and the thickness of the light-transmitting coating 22 is not excessively large, thus ensuring a better light-transmitting performance. At the same time, the thicknesses of the light-shielding coating 21 and the light-transmitting coating 22 are close, which can ensure smoothness of the coating structure 20.

In an embodiment, the thickness of the light-transmitting coating 22 and the thickness of the light-shielding coating 21 are each configured to be, for example, 15 µm, 17 µm, 19 µm, 20 µm, 21 µm, 23 µm, 25 µm, or the like.

Certainly, as some optional solutions, the thickness of the light-transmitting coating 22 and the thickness of the light-shielding coating 21 may alternatively be flexibly adjusted to other values other than 15 µm to 25 µm according to actual requirements.

In an embodiment, the second region is arranged around a periphery of the first region 11. In this way, the first region 11 of the glass body 10 can transmit light, and the scenery outside the motor vehicle can be observed inside the motor vehicle through the first region 11. In addition, the second region surrounds the periphery of the first region 11, that is, is located around the luminous glass assembly, which meets design requirements of most vehicle models.

Certainly, in some optional solutions, the arrangement manner and the actual shape of the second region and the first region 11 may alternatively be flexibly adjusted and selected according to an actual requirement, which are not limited herein.

In an embodiment, the light-shielding coating 21 is made of a black PMMA material. The light-transmitting coating 22 is made of a light-transmitting PMMA material.

In an embodiment, a vehicle door is provided. The vehicle door includes the luminous glass assembly in any one of the above embodiments.

The vehicle door includes the luminous glass assembly in the above embodiments. The technical effect thereof is brought by the luminous glass assembly, and the beneficial effects are the same as those of the luminous glass assembly, which are not described in detail herein again.

In an embodiment, a motor vehicle is provided. The motor vehicle includes the luminous glass assembly in any one of the above embodiments.

The motor vehicle includes the luminous glass assembly in the above embodiments. The technical effect thereof is brought by the luminous glass assembly, and the beneficial effects are the same as those of the luminous glass assembly, which are not described in detail herein again.

In an embodiment, the motor vehicle further includes a vehicle body control module. The vehicle body control module is electrically connected to the atmosphere lamp group 30, and the vehicle body control module is configured to control ON and OFF of the atmosphere lamp group 30.

In an embodiment, the motor vehicle is further configured with a remote control key. The remote control key is provided with a locking button for locking the motor vehicle and an unlocking button for unlocking the motor vehicle. Both the locking button and the unlocking button are electrically connected to the vehicle body control module.

When the locking button is pressed or touched, the vehicle body control module receives an electrical signal and controls the atmosphere lamp group 30 to be turned on, and the atmosphere lamp group 30 is turned on for a first preset time and may automatically be turned off after the first preset time. The first preset time is, for example, 10 S to 30 S, which may be specifically, for example, 20 S.

In addition, when the unlocking button is pressed or touched, the vehicle body control module receives an electrical signal and controls the atmosphere lamp group 30 to be turned on, and after the motor vehicle starts normally, the vehicle body control module controls the atmosphere lamp group 30 to be turned off.

In addition, a light control switch in the vehicle is switched on, and after the vehicle body control module receives an electrical signal, the atmosphere lamp group 30 is correspondingly controlled to be turned on.

The technical features in the above embodiments may be randomly combined. For concise description, not all possible combinations of the technical features in the above embodiments are described. However, all the combinations of the technical features are to be considered as falling within the scope described in this specification provided that they do not conflict with each other.

The above embodiments only describe several implementations of the present application, and their description is specific and detailed, but cannot therefore be understood as a limitation on the patent scope of the present application. It should be noted that those of ordinary skill in the art may further make variations and improvements without departing from the conception of the present application, and these all fall within the protection scope of the present application. Therefore, the patent protection scope of the present application should be subject to the appended claims.

In the description of the present application, it is to be understood that the orientation or position relationships indicated by the terms "central", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", and the like are based on the orientation or position relationships shown in the accompanying drawings and are intended to facilitate the description of the present application and simplify the description only, rather than indicating or implying that the apparatus or element referred to must have a particular orientation or be constructed and operated in a particular orientation, and therefore are not to be interpreted as limiting the present application.

In addition, the terms "first" and "second" are used for descriptive purposes only, which cannot be construed as indicating or implying a relative importance, or implicitly specifying the number of the indicated technical features. Therefore, the features defined with "first" and "second" may explicitly or implicitly include at least one feature. In the description of the present application, "a plurality of" means at least two, such as two or three, unless otherwise defined explicitly and specifically.

In the present application, unless otherwise specified and defined explicitly, the terms "mount", "connect", "join", and "fix" should be understood in a broad sense, which may be, for example, a fixed connection, a detachable connection, or an integral connection; a mechanical connection or an electrical connection; or a direct connection, an indirect connection via an intermediate medium, an internal connection between two elements, or interaction between two elements. Those of ordinary skill in the art can understand specific meanings of these terms in the present application according to specific situations.

In the present application, unless otherwise explicitly specified and defined, the expression a first feature being "on" or "under" a second feature may be the case that the first feature is in direct contact with the second feature, or the first feature is in indirect contact with the second feature via an intermediate medium. Furthermore, the expression the first feature being "over", "above" and "on top of" the second feature may be the case that the first feature is directly above or obliquely above the second feature, or only means that the level of the first feature is higher than that of the second feature. The expression the first feature being "below", "underneath" or "under" the second feature may be the case that the first feature is directly underneath or obliquely underneath the second feature, or only means that the level of the first feature is lower than that of the second feature.

It is to be noted that when one element is referred to as being "fixed to" or "arranged on" another element, it may be directly disposed on the other element or an intermediate element may exist. When one element is considered to be "connected to" another element, it may be directly connected to the other element or an intermediate element may co-exist. The terms "vertical", "horizontal", "upper", "lower", "left", "right" and similar expressions used herein are for illustrative purposes only and do not represent an only implementation.

## Claims

1. A luminous glass assembly, comprising:
a glass body being a transparent plate, the glass body being provided with a first region and a second region connected to the first region, and the first region being a light-transmitting region;
a coating structure correspondingly arranged in the second region; the coating structure comprising a light-shielding coating, and the light-shielding coating being provided with a hollow opening; and
an atmosphere lamp group connected to a back surface of the glass body, the atmosphere lamp group comprising a light-transmitting pattern arranged corresponding to the hollow opening, such that light is capable of sequentially passing through the light-transmitting pattern and the hollow opening and being visible on a front surface of the glass body, and a color of the light-transmitting pattern is different from a color of the light-shielding coating when viewed inwardly from an outer side of the glass body.

2. The luminous glass assembly according to claim 1, wherein the atmosphere lamp group comprises a light guide member and a lighting mechanism, the light guide member comprises the light-transmitting pattern, and light emitted from the lighting mechanism is capable of passing through the light-transmitting pattern and the hollow opening and visible on the front surface of the glass body.

3. The luminous glass assembly according to claim 2, wherein the light guide member further comprises a light-shielding portion arranged around at least one side of a periphery of the light-transmitting pattern, such that the light emitted from the lighting mechanism is capable of passing through the light-transmitting pattern and being blocked by the light-shielding portion, and the light-shielding portion and the light-shielding coating are in the same color.

4. The luminous glass assembly according to claim 2 or 3, wherein a shape of the light-transmitting pattern adapts to a shape of the hollow opening, and a size of the light-transmitting pattern is larger than a size of the hollow opening.

5. The luminous glass assembly according to claim 3 or 4, wherein a shape of the light guide member adapts to a shape of the hollow opening, and a size of the light guide member is larger than a size of the hollow opening.

6. The luminous glass assembly according to any one of claims 3 to 5, wherein the light-transmitting pattern and the light-shielding portion are integrally formed by double-material injection molding to obtain the light guide member.

7. The luminous glass assembly according to any one of claims 3 to 6, wherein a surface color of the light-shielding coating is dark, a surface color of the light-shielding portion is dark, and/or a surface color of the light-transmitting pattern is bright.

8. The luminous glass assembly according to any one of claims 1 to 7, wherein a plate surface of the light guide member is bonded and fixed to the coating structure by a transparent adhesive.

9. The luminous glass assembly according to any one of claims 2 to 7, wherein the lighting mechanism comprises a module housing, a reflective film, a light guide plate, a light-homogenizing film, and a circuit board; the module housing is provided with a cavity and a mounting opening in communication with the cavity, the light guide member is arranged at the mounting opening, the reflective film is connected to a portion of an inner wall of the cavity opposite to the mounting opening, the light guide plate and the light-homogenizing film are sequentially arranged between the reflective film and the light guide member, the light guide plate is connected to the reflective plate and the light-homogenizing film, respectively, the light-homogenizing film is further connected to the light guide member, the circuit board is connected to the light guide plate, and the circuit board is provided with at least one LED lamp bead facing the light guide plate.

10. A luminous glass assembly, comprising:
a glass body being a transparent plate, the glass body being provided with a first region and a second region connected to the first region, and the first region being a light-transmitting region; and
a coating structure correspondingly arranged in the second region, the coating structure comprising a light-shielding coating and a light-transmitting coating connected to the light-shielding coating, and a color of the light-shielding coating being different from a color of the light-transmitting coating.

11. The luminous glass assembly according to claim 10, further comprising an atmosphere lamp group connected to a back surface of the glass body, and a light exit side of the atmosphere lamp group facing the light-transmitting coating.

12. The luminous glass assembly according to claim 10 or 11, wherein the light-shielding coating is a dark coating; and/or the light-transmitting coating is a bright coating.

13. The luminous glass assembly according to claim 12, wherein the color of the light-transmitting coating is white, red, yellow, or green, and the color of the light-shielding coating is black, gray, or dark blue.

14. The luminous glass assembly according to any one of claims 10 to 13, wherein a thickness of the light-transmitting coating is less than or equal to a thickness of the light-shielding coating.

15. The luminous glass assembly according to claim 14, wherein the thickness of the light-transmitting coating and the thickness of the light-shielding coating are each set to be 15 µm to 25 µm.

16. A vehicle door, comprising the luminous glass assembly according to any one of claims 1 to 15.

17. A motor vehicle, comprising the luminous glass assembly according to any one of claims 1 to 15.

18. The motor vehicle according to claim 17, further comprising a vehicle body control module electrically connected to the atmosphere lamp group, and the vehicle body control module being configured to control ON and OFF of the atmosphere lamp group.
